Europäisches Patentamt

(19) European Patent Office

Office européen des brevets

(11) Publication number: **0 194 780**
**A1**

(12) # EUROPEAN PATENT APPLICATION

(21) Application number: **86301371.0**

(22) Date of filing: **26.02.86**

(51) Int. Cl.⁴: **A 21 D 13/00**
**A 21 D 15/00, A 21 D 2/16**

(30) Priority: **14.03.85 GB 8506672**

(43) Date of publication of application:
**17.09.86 Bulletin 86/38**

(84) Designated Contracting States:
**AT BE CH DE FR IT LI LU NL SE**

(71) Applicant: **UNITED BISCUITS (UK) LIMITED**
**12 Hope Street**
**Edinburgh Scotland(GB)**

(72) Inventor: **Caine, Malcolm**
**125 Brook Hill**
**Cookham Berkshire SL6 9LJ(GB)**

(72) Inventor: **Duffin, Valerie Jan**
**1A Kingswood Parade**
**Marlow Bottom Buckinghamshire SL7 3NT(GB)**

(72) Inventor: **Wilkes, Malcolm Stuart**
**10 Milestone Crescent**
**Charvil Twyford Berkshire(GB)**

(74) Representative: **Oliver, Roy Edward et al,**
**POLLAK MERCER & TENCH High Holborn House 52-54**
**High Holborn**
**London WC1V 6RY(GB)**

(54) **Food products.**

(57) Storable wrapped snack food products of the wholly-enclosed sandwich type are made with a casing (100) of high-quality bread obtained by including egg protein and at least one other bread-improver, preferably one or more diacetyl-tartaric acid esters, in the dough used. The bread casing (100) contains a filling (107) and is surrounded by a sealed wrapping (108).

FIG. 2

EP 0 194 780 A1

- 1 -

FOOD PRODUCTS

DESCRIPTION

This invention relates to food products and is concerned, in particular, with precooked food products which are generally similar to sandwiches and so involve minimal preparation for consumption. Food products of this general kind can conveniently form all or a major part of a quick meal or snack. The food products of this invention, like conventional sandwiches, are intended to be eaten while held in the hand and their preparation in order to be eaten typically involves merely a simple heating step and the opening or removal of wrapping or packaging material. Sandwiches in the closed form are one type of snack product which is very widely known and used, as they can be handled very conveniently, both when being prepared and also while being eaten, because the bread slices provide the entire exterior surfaces and prevent the filling from contacting the hands. It is common practice, both in the home and in commercial locations supplying snacks, for sandwiches to be warmed or toasted in preparation for consumption, especially when the fillings are savoury in nature, because this enhances their flavour and other eating characteristics. However, the preparation of sandwiches requires a variety of component materials, all in a fresh state, and prepared sandwiches rapidly become stale. For these reasons, the commercial supply of sandwiches, whether plain or toasted, is labour-intensive, expensive and potentially wasteful, as usually preparation either takes place to order or it involves the immediate wrapping of individual sandwiches, although even packaged sandwiches deteriorate in a few days. Chilling or freezing can be used in the home or in commercial locations to store sandwiches for several days or months, respectively, but the wide variety of components in them react in different ways and such products are seldom if ever satisfactory when returned to ambient temperature or warmed for consumption.

In view of the high and increasing popularity of snack products of the sandwich type, there is a considerable demand for a product which meets a number of criteria, which are not fulfilled by the conventional sandwich, and there is thus great commercial potential in the manufacture and supply of such a snack product. The main criteria to be satisfied by a product according to this concept are as follows:

(1) the product should be at least sufficiently microbially stable to form no risk to health and therefore to be capable of storage for a substantial length of time;

(2) the product should be storable for such substantial lengths of time at normal commercial or domestic chill cabinet temperatures, for instance from -2° to 8°C, so that provision of low-temperature equipment, such as freezers is unnecessary; products which are storable under such chilled conditions are storable, possibly for shorter but still substantial periods of time, at normal room temperature, so as to remain in a satisfactory condition;

(3) the product should remain in a satisfactory state, under such chilled storage conditions, typically for a period of 2, 4 or 6 weeks and possibly of up to 2 or 3 months and also for perhaps a shorter period, if kept under ambient temperature storage conditions; in particular, the bread casing should be fresh and appetising, after contact with the filling during a storage period and also when raised to or above room temperature prior to consumption;

(4) preparation of the product for consumption, when removed from storage, should involve only very simple and easy steps, including the removal of the product from its wrapping or packaging material or vice versa and a heating or cooking step, which can be carried out either before or after separation of the product from its wrapping or packaging material and which may either de-chill the product, by raising it to room temperature, or warm it for consumption in a hot state, if desired after toasting of the bread casing.

It has now been discovered that snack food products can be made which meet these criteria and which can also have other desirable and advantageous features. The invention also provides methods of manufacture of such products; together with methods for the preparation of such products so as to make them ready for consumption.

According to an aspect of this invention, a method is provided for the manufacture of a snack food product comprising a filling located within and wholly enclosed by a bread-like casing, in which the casing is made by heating a yeast-raised or other dough which includes at least two bread-improver agents, for modifying the texture and other properties of the casing, and is characterised in that the dough includes both egg protein and at least one other bread-improver agent. Preferably, the other bread-improver agent comprises one or more diacetyl-tartaric acid esters.

Preferably, the two bread-improver agents are whole egg and one or more diacetyl-tartaric acid esters and are provided in amounts ranging from 2.0% to 5.0% of whole egg and 0.15% to 0.40% of diacetyl-tartaric acid ester by weight of the moist bread dough used to make the casing.

A snack food product according to this invention comprises a filling located inside and wholly enclosed by a bread-like casing, the casing having been made from a dough which includes both of the improver agents described above. Preferably, the product is wholly enclosed in a sterile moisture-proof wrapping, which makes the wrapped product capable of storage under chilled conditions for a substantial length of time. The wrapping is intended to protect the food product per se, comprising the casing with the filling inside it, from the effects of any agents or conditions likely to have a deleterious action upon it. Such agents or conditions mainly comprise heat, light and, above all, moisture and micro-organisms, so that the wrapping should desirably provide a high standard of protection against these influences. The wrapping preferably is a laminate comprising a plastics material layer and a metal foil and the laminate is disposed about the snack food product with the plastics layer in contact with the casing. The laminate can in practice include a third outer layer, which may be another plastics material or paper, for instance, and is primarily intended to carry printed or other advertising matter and information. The metal foil preferably is aluminium and in the main protects the food product from the adverse effects of moisture and light and also serves as a barrier to micro-organisms. It is preferable for the metal foil not to make direct contact with the casing of the food product per se and the wrapping therefore includes the inner plastics material layer or film. All the components of the wrapping laminate should be capable of undergoing sterilization without adverse effects, by any of the sterilization methods used in the food industry.

In making the wrapped food product of the invention, a preferred technique is to form a sealable enclosure from the wrapping, the food product being inserted through an aperture in the enclosure and the aperture then being closed. Preferably, prior to enclosure of the snack food product in the wrapping, the product is subjected to reduced pressure in order to remove from it a proportion of the air contained therein. It is also very useful to effect a gas-flushing step and this can conveniently be carried out following air removal as just described. In a preferred embodiment of the method of the invention, the product is contacted with a gas comprising carbon dioxide while subject to the reduced pressure and the wrapping is then closed, so that the wrapped and sealed product contains an atmosphere comprising air and carbon dioxide. The partial removal of air from the product and its replacement with a gas comprising carbon dioxide has the advantage, it has been found, of providing the food product with an internal gas environment which is wholly compatible with the components of the food product, while the residual oxygen content ensures that pathogenic bacteria and other micro-organisms which thrive under substantially anaerobic conditions are inhibited. Preferably, the wrapped and sealed product contains an atmosphere comprising 2% to 8% and more preferably 4% to 6% of oxygen in admixture with carbon dioxide and one or more inert gases, e.g. nitrogen, the atmosphere contained in the product most preferably comprising 25% air and 75% carbon dioxide.

It has further been discovered that it is advantageous to carry out the final stage of manufacture, in which the filled casings are enclosed in the sterile moisture-proof and preferably gas-proof wrapping, while the filled casings are still hot from the previous manufacturing stage, so that the products are already wrapped as they cool to normal temperature conditions prior to storage and eventual use

It has been discovered that wrapped snack food products embodying the concepts of the invention as described above are eminently suitable for long-term storage at a modestly-reduced temperature, such as is readily attainable in commercial and domestic chill cabinets. By way of example, a temperature in the range from -2° to 8°C is typically attained in such apparatus and it has been established that snack food products of the invention are capable of storage and then consumption, and after being raised to a suitable temperature, whilst still in a wholly satisfactory condition, after a period of 2, 3 or 4 weeks from manufacture.

The present invention thus provides methods of manufacture and preparation for consumption of composite snack food products comprising a bread casing and a filling, generally a savoury filling. Such products, when wrapped and stored at a chill temperature can have an in-store shelf life of 3 weeks from the date of manufacture, for instance.

In order that the invention may be readily understood and appreciated, a number of preferred embodiments of the method and the product are described below, by way of illustration.

The bread dough is mixed using conventional machinery and is then sheeted to provide top and bottom layers, the top being 25% thicker to allow for stretching over the filling deposits. The top layer also has diagonal score patterns cut through to coincide with the surface of the finished pieces and to provide for steam escape during baking.

The bread recipe contains two dough "improvers", liquid egg to provide good quality protein and one or a mixture of diacetyl-tartaric acid esters (DATA), to provide greater extensibility. The two improvers combine to produce a more open-textured baked bread, having a volume, satisfactory mouth feel and other eating characteristics and a generally high quality which cannot be obtained with other improvers or combinations of improvers.

The fillings are prepared in conventional cooking equipment, cooled and then deposited, either into shaped moulds until set or directly on to the bottom dough layer in rectangular aliquots of known weight or volume.

The various fillings desirably have a common base sauce, to which various garnishes are added so as to provide the desired character.

The top dough layer is now placed on the bottom layer which holds the filling deposits, so that the score patterns register with the fillings. The two dough layers are then sealed together around the fillings and cut to the required shape. The scrap dough is then removed for reprocessing and the raw pieces are brushed with melted butter prior to baking, e.g. for 12 minutes at 210°C.

After baking, the products packed whilst still hot in individual polythene/aluminium foil laminated wrappers under an atmosphere comprising 75% carbon dioxide/25% air and are then cooled and placed in chilled storage containers at a temperature of 4°C prior to distribution to chilled display cabinets, approximately at the same temperature.

In the following recipes, the amounts are given in percentages by weight.

EXAMPLE 1

Bread

| Ingredients | % |
|---|---|
| Wholemeal bread flour | 56.02 |
| Dried gluten | 2.80 |
| Whole egg | 3.36 |
| Salt | 0.56 |
| Shortening | 0.84 |
| Fresh yeasts | 1.96 |
| Granulated sugar | 1.68 |
| DATA esters | 0.28 |
| Water | 32.49 |

EXAMPLE 2

Base Sauce

| Ingredients | % |
|---|---|
| Hot water | 11.0 |
| Gelatin | 2.98 |
| UHT cream | 28.59 |
| Cream cheese (38% fat) | 44.67 |
| Chopped onion | 3.93 |
| Ground bayleaf | 0.02 |
| Corn starch | 3.93 |
| Milk | 3.10 |
| Salt | 0.59 |
| Ground white pepper | 0.02 |
| English mustard | 0.12 |

EXAMPLE 3

Fillings

These are made by mixing the stated amounts of the base sauce of Example 2 with the other ingredients in order to give fillings of the desired nature.

(a) Cheese and Ham

| Ingredients | % |
| --- | --- |
| Base sauce | 83.38 |
| Grated Gruyere cheese | 3.60 |
| Grated Cheddar cheese | 5.4 |
| Diced ham | 7.62 |

(b) Mushroom

| Ingredients | % |
| --- | --- |
| Base sauce | 33.07 |
| Sliced mushrooms | 55.11 |
| Chopped onion | 6.61 |
| Garlic puree | 0.11 |
| Butter | 2.20 |
| Salt | 0.55 |
| Chopped parsley | 1.10 |
| Ground black pepper | 0.11 |
| Ground thyme | 0.02 |
| Lemon juice | 1.10 |

(c) Prawn and Tomato

| Ingredients | % |
| --- | --- |
| Base sauce | 67.39 |
| Diced cooked prawns | 28.88 |
| Tomato puree | 1.93 |
| Chopped chive | 0.29 |
| Salt | 0.48 |
| Ground black pepper | 0.07 |
| F.D. shrimp powder | 0.96 |

(d) Burger and Tomato

| Ingredients | % |
| --- | --- |
| Base sauce | 42.70 |
| Diced cooked burger | 35.59 |
| Tomato ketchup | 21.35 |
| Salt | 0.36 |

The products of this invention and their methods of manufacture and use, i.e. their methods of preparation for consumption are characterised as indicated in detail above, primarily in relation to the improver agents included in the bread casing dough, the materials and techniques preferably used in wrapping the products for storage and the use of chill temperatures for storage purposes. The preferred shape, appearance and construction of the products are illustrated in the accompanying drawings, in which:

Fig. 1 shows an open shaped bread pallet in diagrammatic perspective view, before the application of a filling material to it;

Fig. 2 shows the pallet of Fig. 1 after it has been filled, closed and provided with a wrapping material;

Fig. 3 shows the snack product of Fig. 2 after it has been separated from the wrapping and is ready for consumption or for heating prior to consumption.

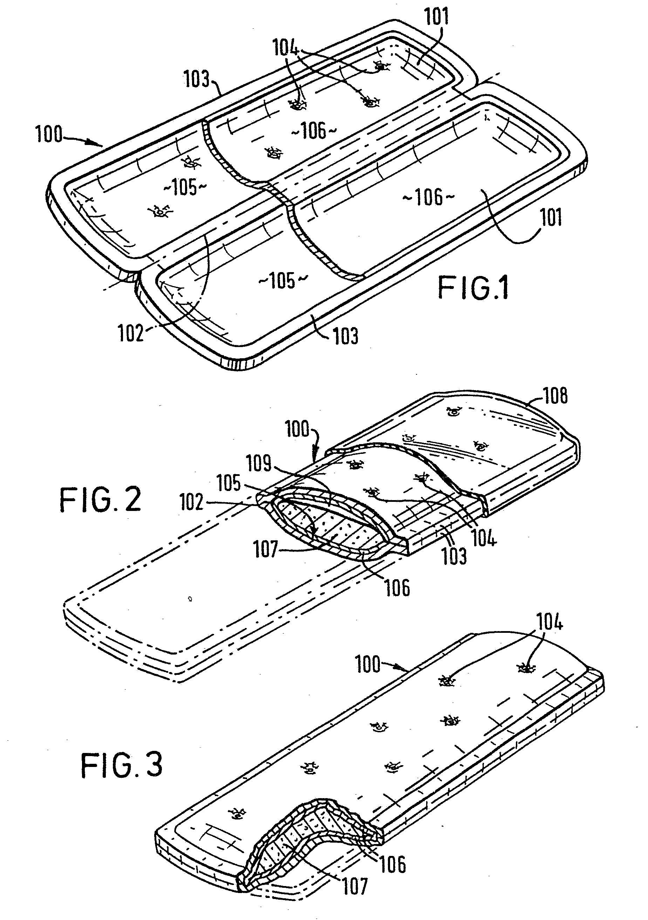

Fig. 1 shows a shaped bread pallet 100 comprising two similar elongated shallow halves 101 joined along a central line 102. Each half 101 of the pallet 100 includes a peripheral flange 103 and closure of the pallet by hinging about the line 102 brings the flange 103 of one half 101 into contact with the flange 103 of the other, so that the pallet 100 can be closed to form the exterior casing of the product. The halves 101 of the pallet 100 or at least the half 101 which is intended to be uppermost after closure are/is preferably provided with vapour escape holes, such as are shown at 104.

The interior surfaces 105 of the pallet halves 101 can be provided with an integral barrier layer 106, which can if desired extend over the mutually-contacting surfaces of the flanges 103.

Fig. 2 shows the closed casing 100, with the flanges 103 in contact and the barrier layer 106 covering the entire interior surfaces 105. The filling deposited upon the open pallet before closure to make the casing 100 is shown at 107 and a moisture-proof sterilizable food-compatible wrapping 108 is provided fully around the snack food product and, in this condition, the product is capable of storage, under chill-cabinet conditions, for extended periods of time, i.e. from 1 to 3 months or even longer. A space 109 may be formed between the filling 107 and the part of the casing 100 containing the vapour escape holes 104.

Fig. 3 shows the product when separated from the wrapping 108 and heated ready for consumption. The barrier layer 106 may melt into the casing 100 or the filling 107 or both in this step and also the filling 107 may expand into contact with the casing 100, so that the vapour space 109 disappears. Fig. 3 shows that the filling 107 is wholly enclosed by the high-quality bread casing 100, so that the snack product can be eaten while held, with the hand only in contact with the casing 100.

CLAIMS:

1. A method of manufacture of a snack food product comprising a filling located inside and wholly enclosed by a bread-like casing, in which the casing is made by heating a yeast-raised or other dough which includes at least two bread-improver agents, for modifying the texture and other properties of the casing, characterised in that the dough includes both egg protein and at least one other bread-improver agent.

2. A method according to claim 1, in which the other bread-improver agent comprises one or more diacetyl-tartaric acid esters.

3. A method according to claim 1 or 2, in which the snack food product is wholly enclosed in a sterile moisture-proof wrapping, which makes the wrapped product capable of storage under chilled conditions for a substantial length of time.

4. A method according to claim 3, in which the wrapping is a laminate comprising a plastics material layer and a metal foil and the laminate is disposed about the snack food product with the plastics layer in contact with the casing.

5. A method according to claim 3 or 4, in which the snack food product is inserted through an aperture in an enclosure comprising the wrapping and the aperture is then sealed.

6. A method according to any of claims 3 to 5, in which the snack food product is enclosed in the wrapping while hot and is cooled when already sealed in the wrapping.

7. A method according to claim 6, in which the product is contacted with a gas comprising carbon dioxide and the wrapping is then closed, so that the wrapped and sealed product contains an atmosphere comprising air and carbon dioxide.

8. A method according to any of claims 3 to 7, in which, prior to enclosure of the snack food product in the wrapping, the product is subjected to reduced pressure in order to remove from it a proportion of the air contained therein.

9. A method according to claim 8, in which the wrapped and sealed product contains an atmosphere comprising 2% to 8% oxygen in admixture with carbon dioxide and one or more inert gases.

10. A method according to claim 8 or 9, in which the wrapped and sealed product contains an atmosphere comprising 25% air and 75% carbon dioxide.

11. A method according to any preceding claim, in which the wrapped snack food product is stored prior to consumption by being reduced to and maintained at a temperature in the range from -2° to 8°C.

12. A method according to any preceding claim, in which the two bread-improver agents are whole egg and one or more diacetyl-tartaric acid esters and are provided in amounts ranging from 2.0% to 5.0% of whole egg and 0.15% to 0.40% of diacetyl-tartaric acid ester by weight of the moist bread dough used to make the casing.

0194780

1 / 1

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 283 430 (R.D. DOSTER et al.) <br> * Claims 1,7; column 5, lines 50-63; example IV; figures 1-6; column 6, lines 5-9 * | 1 | A 21 D 13/00 <br> A 21 D 15/00 <br> A 21 D 2/16 |
| | --- | | |
| P,X | EP-A-0 149 265 (THE PROCTER & GAMBLE) <br> * Claims 1,8,9; page 5, lines 19-27; page 8, line 30 - page 9, line 11; page 9, line 32 - page 10, line 4 * | 1 | |
| | --- | | |
| Y | BAKER'S DIGEST, vol. 57, no. 5, September/October 1983, pages 6-9, Chicago, Illinois, US; K. LORENZ: "Diacetyl tartaric acid esters of monoglycerides (DATEM) as emulsifiers in breads and buns" <br> * Table 2; page 7, column 2, paragraph 2 * | 1-5,7-10,12 | |
| | | | **TECHNICAL FIELDS SEARCHED (Int Cl.4)** |
| | --- | | |
| Y | FR-A-2 044 063 (SOCIETE OLIDA & CABY ASSOCIES) <br> * Claims 1,5,6,9; page 6, lines 11-26; page 5, line 23 - page 6, line 7 * | 1-5,7-10,12 | A 21 D <br> B 65 D |
| | --- | | |
| A | GB-A-1 192 869 (THE PILLSBURY CO.) <br> * Claim 1; page 2, lines 105-113 * | 1 | |
| | ---     -/- | | |

The present search report has been drawn up for all claims

| Place of search | Date of completion of the search | Examiner |
|---|---|---|
| THE HAGUE | 29-05-1986 | COUCKE A.O.M. |

0194780
Application number

European Patent
Office

EUROPEAN SEARCH REPORT

EP  86 30 1371

## DOCUMENTS CONSIDERED TO BE RELEVANT

Page  2

| Category | Citation of document with indication, where appropriate, of relevant passages | Relevant to claim | CLASSIFICATION OF THE APPLICATION (Int. Cl.4) |
|---|---|---|---|
| A | GB-A-1 188 170  (AMERICAN CAN CO.) <br> * Figures 1,2; claims 1,6-8; page 1, lines 11-15; page 2, lines 20-39,102-113 * | 4,5,7, 8 | |
| A | GB-A-1 167 909  (GENERAL FOODS CORP.) | | |
| A | GB-A- 908 147  (J.L. REYNOLDS) | | |
| A | GB-A-2 005 980  (G. JOULIN) <br> * Page 1, lines 62-76; page 2, lines 25-32 * | 7,10 | |

TECHNICAL FIELDS
SEARCHED (Int. Cl.4)

The present search report has been drawn up for all claims

| Place of search | Date of completion of the search | Examiner |
|---|---|---|
| THE HAGUE | 29-05-1986 | COUCKE A.O.M. |